## Europäisches Patentamt
## European Patent Office
## Office européen des brevets

(19)

(11) Numéro de publication : **0 178 193 B1**

(12)

# FASCICULE DE BREVET EUROPÉEN

(45) Date de publication du fascicule du brevet :
09.11.88

(51) Int. Cl.⁴ : **G 21 C 17/10,** H 02 G 3/22, H 01 B 17/30

(21) Numéro de dépôt : **85401485.9**

(22) Date de dépôt : **18.07.85**

(54) Procédé de réalisation d'une traversée étanche pour câbles, ignifuge et assurant une protection biologique.

(30) Priorité : **31.08.84 FR 8413485**

(43) Date de publication de la demande :
**16.04.86 Bulletin 86/16**

(45) Mention de la délivrance du brevet :
**09.11.88 Bulletin 88/45**

(84) Etats contractants désignés :
**BE CH DE GB IT LI LU NL**

(56) Documents cités :
·DE-A- 2 551 693
DE-A- 2 821 191
GB-A- 2 014 353
US-A- 3 520 989
**NUCLEAR ENGINEERING INTERNATIONAL, vol. 24,
no. 290, septembre 1979, pages 58-59, Haywards
Heath, GB; "Silicone foam fire seals for Sweden"**

(73) Titulaire : **NOVATOME**
**La Boursidière R.N. 186**
**F-92357 Le Plessis Robinson (FR)**

(72) Inventeur : **Beckers, Gilbert**
**5 square Marronniers**
**F-78150 Rocquencourt (FR)**

(74) Mandataire : **Polus, Camille et al**
**c/o Cabinet Lavoix 2, Place d'Estienne d'Orves**
**F-75441 Paris Cedex 09 (FR)**

## Description

L'invention concerne un procédé de réalisation d'une traversée étanche, ignifuge et assurant une protection biologique, pour une pluralité de câbles traversant une paroi par une ouverture ménagée préalablement sur toute l'épaisseur de la paroi. L'invention concerne également la traversée étanche, ignifuge et assurant une protection biologique obtenue.

Dans de nombreuses installations, des câbles d'alimentation électriques doivent traverser des parois ou des murs de façon qu'aucun échange gazeux ne puisse se faire entre les deux côtés de la paroi et que le feu ne puisse se propager d'un côté à l'autre de la paroi, au niveau de la traversée des câbles.

De plus, dans les installations soumises à des rayonnements nucléaires dans certaines de leurs parties, telles que les centrales nucléaires, les dispositifs d'irradiation ou les appareils de recherche nucléaires, les traversées de câbles doivent également arrêter les rayonnements et assurer ainsi une protection biologique de l'espace situé d'un côté de la paroi. Cette protection biologique doit être au moins équivalente à la protection assurée par la paroi traversée par les câbles qui est très souvent constituée par un mur de béton de forte épaisseur.

On a proposé divers procédés de réalisation d'une telle traversée de câbles consistant à introduire un matériau de remplissage et d'étanchéification dans l'ouverture, autour des câbles placés dans leur position définitive au niveau de l'ouverture.

On a proposé également diverses formes de panneaux permettant le maintien des câbles et une certaine isolation.

Cependant, dans le cas où l'on désire assurer une protection biologique efficace au niveau de la traversée, la mise en œuvre de ces procédés et dispositifs ne permet pas d'atteindre facilement les performances requises.

La mise en place des moyens d'isolation et la réalisation de la traversée demandent des opérations longues et compliquées. Ceci est d'autant plus vrai que le nombre de câbles traversant la paroi est plus élevé et que ces câbles sont plus proches les uns des autres.

Le but de l'invention est donc de proposer un procédé de réalisation d'une traversée étanche, ignifuge et assurant une protection biologique, pour une pluralité de câbles traversant une paroi par une ouverture ménagée préalablement sur toute l'épaisseur de la paroi, consistant à disposer les câbles dans leur position définitive au niveau de l'ouverture puis à introduire un matériau de remplissage et d'étanchéification dans l'ouverture, entre les câbles et entre les câbles et les bords de l'ouverture, procédé qui permette d'atteindre de très bonnes performances quant à la capacité d'isolation de la traversée, tout en étant d'une mise en œuvre simple et rapide.

Dans ce but :

— on réalise un panneau de moulage au voisinage de chacune des faces de l'ouverture, par juxtaposition de fragments de panneau en matière polymère, entre les câbles et entre ceux-ci le bord de l'ouverture,

— on injecte un coulis visqueux de ciment ignifuge à prise rapide et sans retrait entre les câbles de chaque côté de la paroi, en contact avec le panneau de moulage, à l'extérieur de l'ouverture, pour réaliser deux parois de fermeture du volume intérieur de cette ouverture, en prévoyant au moins un tube de réserve traversant au moins l'une des parois de fermeture et le panneau de moulage correspondant et faisant communiquer l'extérieur avec le volume intérieur de l'ouverture

— et on injecte dans le volume intérieur de l'ouverture, jusqu'à remplissage complet de celui-ci, par le tube de réserve, après durcissement du ciment des parois de fermeture, une résine polymérisable fluide chargée en produits très finement divisés comportant au moins un élément à poids atomique élevé, susceptible de durcir par polymérisation in situ dans l'ouverture.

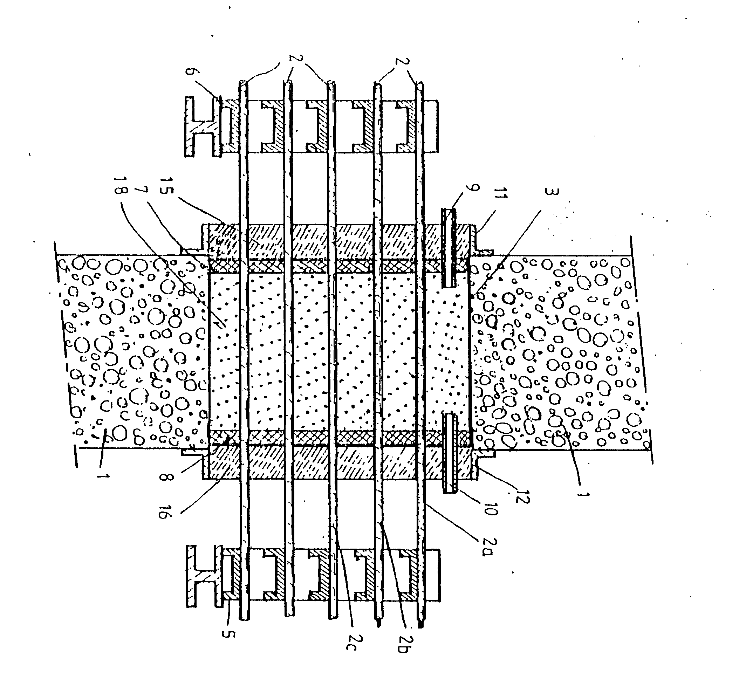

Afin de bien faire comprendre l'invention, on va maintenant décrire en se référant à la figure jointe en annexe, un mode de réalisation d'une traversée suivant l'invention et cette traversée.

La figure unique représente une vue en coupe à l'intérieur de la paroi, au niveau de la traversée de passage des câbles.

Sur la figure, on voit la paroi 1 en béton de forte épaisseur traversée par les câbles 2 au niveau d'une ouverture 3 ménagée dans la paroi 1 sur toute son épaisseur.

Les câbles 2 sont disposés dans l'ouverture de forme carrée en nappes successives horizontales 2a, 2b, 2c... Dans chacune des nappes 2a, 2b, ..., les câbles sont espacés d'une distance de quelques centimètres. Les nappes sont également séparées les unes des autres et des parois de l'ouverture, en ce qui concerne les nappes extrêmes, par une distance de quelques centimètres. La densité des câbles dans l'ouverture est donc très grande et la position et l'espacement des câbles sont maintenus par des dispositifs de fixation provisoires ou définitifs 5 et 6 placés de part et d'autre de l'ouverture 3 de la paroi.

On va maintenant décrire le procédé de réalisation de la traversée étanche et ignifuge tel que représenté sur la figure unique.

Les câbles étant en place dans l'ouverture 3, on vient insérer entre ces câbles et entre les câbles placés en position extrême et les bords de l'ouverture 3, des morceaux de panneau en polystyrène pour constituer deux panneaux de moulage 7 et 8 au voisinage des deux faces de la paroi 1. Les panneaux de moulage 7 et 8 ainsi constitués occupent pratiquement toute la surface de l'ouverture autour des câbles. Pendant cette opération, on insère également dans chacun des panneaux de moulage 7 et 8, un tube 9, 10 respectivement.

Les tubes 9 et 10 débouchent donc dans le volume intérieur de l'ouverture 3 limitée par les parois de moulage 7 et 8.

Autour de chacune des extrémités de l'ouverture, sur chacune des faces correspondant de la paroi 1, sont également fixés des profilés constituant deux cadres 11 et 12 ménageant un espace autour des câbles à l'extérieur de la paroi, au-delà des panneaux de moulage 7 et 8. Les profilés constituant les cadres 11 et 12 peuvent être fixés sur la paroi de béton 1 par tout moyen tel que scellement, collage ou vissage.

On prépare alors un coulis de ciment ignifuge à forte viscosité, tel que par exemple le produit vendu sous l'appellation Novasit par la Société BIO-BRANDSCHUTZ.

Ce produit qui durcit en une dizaine de secondes après sa mise en place possède d'excellentes propriétés ignifuges et ne subit aucun retrait au moment de la prise.

Le coulis de ciment est immédiatement injecté dans les espaces ménagés autour des câbles par les cadres 11 et 12 et limité vers l'intérieur par les panneaux de moulage 7 et 8. Le ciment remplit ainsi l'intégralité de l'espace entre les câbles et entre les câbles et les cadres 11 et 12, pour constituer par durcissement, aussitôt après son injection, deux parois 15 et 16 limitant de chaque côté de la paroi 1, le volume intérieur de l'ouverture 3.

Les tubes 9 et 10 qui débouchent à l'une de leur extrémité dans le volume intérieur de l'ouverture 3 sont d'une longueur suffisante pour déboucher à leur autre extrémité, à l'extérieur des parois 15 et 16 respectivement. On a ainsi ménagé un passage entre l'extérieur et l'intérieur de la traversée.

Les parois 15 et 16 peuvent avoir une épaisseur de 5 à 10 cm dans le cas des traversées de câbles des installations de réacteurs nucléaires.

La prise complète du ciment constituant les parois 15 et 16 demande à peu près 24 heures. Lorsque cette prise complète est réalisée, on injecte par le tube 10, dans le volume intérieur de l'ouverture 3, une résine chargée en produits comportant au moins un élément à poids atomique élevé.

On utilise de préférence une résine telle que l'élastomère de silicone doubles composants ayant une densité avant charge de 1,2. Cette résine est commercialisée par les Sociétés DOW-CORNING et RHONE-POULENC.

Cette résine est très fluide avant l'incorporation des produits de charge et garde après cette incorporation, une fluidité suffisante pour que son injection par le tube 10 dans le volume intérieur de l'ouverture 3 puisse être effectuée sans difficulté.

On incorpore à l'élastomère de silicone un produit lourd ou un ensemble de produits lourds tel que de la poudre de plomb extrêmement fine ou, d'oxyde de plomb ou de baryte, en quantité telle que la densité apparente de la résine chargée soit égale ou supérieure à la densité de la paroi.

Pendant l'injection par le tube 10, l'air contenu dans le volume intérieur de l'ouverture 3 est évacué par le tube 9 ménagé dans la paroi 15. On effectue ainsi le remplissage complet de ce volume intérieur par la résine, en s'assurant qu'il ne subsiste aucune poche ou bulle d'air. La fluidité de la résine assure un remplissage complet et homogène.

Après injection dans le volume intérieur de l'ouverture 3, la résine chargée est polymérisée in situ et constitue ainsi un bloc solide entourant parfaitement les câbles 2 et parfaitement jointif avec les bords de l'ouverture 3.

La traversée réalisée représentée sur la figure présente des qualités ignifuges sur ses deux faces grâce aux parois de fermeture 15 et 16 en ciment ignifuge. En cas d'incendie et de combustion de l'isolant des câbles 2, ce ciment ignifuge se contracte et maintient ainsi l'étanchéité autour des câbles 2.

D'autre part, la résine chargée en éléments lourds et polymérisée constituant la partie centrale 18 de la traversée assure une protection biologique qui est au moins équivalente à la protection de la paroi 1, puisque son épaisseur est pratiquement identique à l'épaisseur de cette paroi et sa densité supérieure.

Les panneaux de moulage 7 et 8 sont disposés le plus près possible des extrémités de l'ouverture 3 au niveau des faces de la paroi 1 afin de ménager un espace intérieur d'une épaisseur pratiquement égale à celle de la paroi 1.

On peut également mettre en place dans un premier temps, l'un des panneaux de moulage 7 ou 8, réaliser la paroi de fermeture correspondante ignifuge 15 ou 16, puis extraire depuis l'autre côté de la paroi, les fragments de polystyrène constituant le panneau de moulage 7 ou 8. On met alors en place l'autre panneau de moulage et l'on réalise par injection l'autre paroi de fermeture. Le bloc central de résine chargée polymérisée est réalisé comme précédemment. L'avantage est d'accroître encore l'épaisseur de ce bloc 18 en supprimant l'un des panneaux de moulage.

Cette paroi est caractérisée par la présence de deux parois de fermeture ignifuges 15 et 16 de part et d'autre de la traversée entre lesquelles, le volume intérieur de l'ouverture 3 est rempli par un bloc de matière polymérisable chargée en produits comportant au moins un élément à poids atomique élevé. Une telle paroi présente à la fois des propriétés isolantes, ignifuges et de protection biologique excellente.

L'invention ne se limite pas au mode de réalisation qui vient d'être décrit.

On peut par exemple utiliser des matériaux différents de ceux qui ont été décrits pour la réalisation des parois de fermeture ignifuges et du bloc central en résine chargée.

Enfin, le procédé et la traversée obtenue s'appliquent non seulement dans le cas des installations de réacteurs nucléaires mais également dans le cas des dispositifs d'irradiation, des appareils de recherche nucléaire, des cellules de stockage de matériaux radio-actifs et plus généralement dans tous les cas où un local isolé par une paroi est soumis à des rayonnements radio-actifs.

## Revendications

1. Procédé de réalisation d'une traversée étanche, ignifuge et assurant une protection biologique, pour une pluralité de câbles (2) traversant une paroi (1) par une ouverture (3) ménagée préalablement sur toute l'épaisseur de la paroi, consistant à disposer les câbles (2) dans leur position définitive au niveau de l'ouverture puis à introduire un matériau de remplissage et d'étanchéification dans l'ouverture, entre les câbles (2) et entre les câbles (2) et les bords de l'ouverture (3), caractérisé par le fait :

— qu'on réalise un panneau de moulage (7, 8) au voisinage de chacune des faces de l'ouverture, par juxtaposition de fragments de panneau en matière polymère, entre les câbles (2) et entre ceux-ci et le bord de l'ouverture (3),

— qu'on injecte un coulis visqueux de ciment ignifuge à prise rapide et sans retrait entre les câbles (2) de chaque côté de la paroi (1), en contact avec le panneau de moulage, à l'intérieur de l'ouverture, pour réaliser deux parois de fermeture (15, 16) du volume intérieur de cette ouverture, en prévoyant au moins un tube de réserve (9, 10) traversant au moins l'une des parois de fermeture (15, 16) et le panneau de moulage correspondant et faisant communiquer l'extérieur avec le volume intérieur de l'ouverture,

— et qu'on injecte dans le volume intérieur de l'ouverture (3) jusqu'à remplissage complet de celui-ci, par le tube de réserve (9, 10), après durcissement du ciment des parois de fermeture (15, 16), une résine polymérisable fluide chargée en produits comportant au moins un élément à poids atomique élevé très finement divisés, susceptible de durcir par polymérisation in situ dans l'ouverture (3).

2. Procédé suivant la revendication 1, caractérisé par le fait que les panneaux de moulage (7, 8) sont constitués par des fragments d'une plaque en polystyrène.

3. Procédé suivant l'une quelconque des revendications 1 et 2, caractérisé par le fait qu'un cadre (11, 12) constitué par des profilés est disposé autour de chacune des extrémités de l'ouverture (3), sur les faces correspondantes de la paroi (1), pour constituer un espace autour des câbles, à la sortie de l'ouverture (3), dans lequel est injecté le coulis de ciment ignifuge.

4. Procédé suivant l'une quelconque des revendications 1, 2 et 3, caractérisé par le fait que le produit de charge de la résine polymérisable est une poudre d'une substance appartenant au groupe plomb, oxyde de plomb, baryte.

5. Procédé suivant l'une quelconque des revendications 1, 2, 3 et 4, caractérisé par le fait que la résine polymérisable est un élastomère de silicone à doubles composants.

## Claims

1. A method of producing a hermetic flame resisting lead-in ensuring biological protection for a plurality of cables (2) extending through a wall (1) via an opening (3) previously made through the whole thickness of the wall, wherein the cables (2) are disposed in their final position in the opening and then a filling and sealing material is introduced into the opening, between the cables (2), and between the cables (2) and the edges of the opening (3), characterized in that a moulding panel (7, 8) is produced adjacent each of the faces of the opening by the juxtaposition of fragments of a panel of a polymeric material between the cables (2), and between the cables (2) and the edge of the opening (3) ; a viscous slurry of non-shrink quick-taking flame resisting cement is injected between the cables (2) on each side of the wall (1), in contact with the moulding panel, inside the opening, to produce two walls (15, 16) closing the interior volume of the opening, at least one reserve tube (9, 10) being provided which extends through at least one of the closure walls (15, 16) and the corresponding moulding panel and makes a communication between the outside and the interior volume of the opening ; and after the cement of the closure walls (15, 16) has hardened, a fluid polymerizable resin charged with very finely divided products comprising at least one element of very high atomic weight capable of hardening by polymerization in situ in the opening (3) is injected via the reserve tube (9, 10) into the interior volume of the opening (3) until such volume is completely filled.

2. A method according to claim 1, characterized in that the moulding panels (7, 8) are formed by fragments of a sheet of polystyrene.

3. A method according to one of claims 1 and 2, characterized in that a frame (11, 12) formed by sectional members is disposed around each of the ends of the opening (3), on the corresponding faces of the wall (1), to form a space around the cables at the outlet of the opening (3), the slurry of flame resisting cement being injected into such space.

4. A method according to any of claims 1, 2 and 3, characterized in that the product with which the polymerizable resin is charged is a powder of a substance belonging to the group formed by lead, lead oxide and barite.

5. A method according to any of claims 1, 2, 3 and 4, characterized in that the polymerizable resin is a silicone elastomer with double components.

## Patentansprüche

1. Verfahren zur Herstellung einer dichten, feuerfesten und einen biologischen Schutz sichernden Durchführung für eine Mehrzahl von Kabeln (2), die eine Wand (1) durch eine vorab über die ganze Dicke der Wand gebildete Öffnung (3) durchsetzt, das darin besteht, die Kabel (2) in ihrer endgültigen Lage auf Höhe der Öffnung anzuordnen, dann ein Füll- und Abdichtungsmaterial in die Öffnung zwischen die Kabel (2) und zwischen den Kabeln (2) und den Rändern der Öffnung (3) einzuführen, dadurch gekennzeichnet,

— daß man eine Formfüllwand (7, 8) nahe jeder der Stirnflächen der Öffnung durch Nebeneinanderanordnung von Wandteilstücken aus Polymermaterial zwischen den Kabeln (2) und zwischen diesen und dem Rand der Öffnung (3) herstellt,

— daß man einen viskosen Brei von feuerfestem Zement mit schneller Abbindung und ohne Schrumpfung zwischen die Kabel (2) an jeder Seite der Wand (1) im Kontakt mit der Formfüllwand im Inneren der Öffnung einspritzt, um zwei Wände (15, 16) zum Verschluß des Innenvolumens dieser Öffnung herzustellen, wobei man wenigstens ein Reservierrohr (9, 10) vorsieht, das wenigstens eine der Verschlußwände (15, 16) und die entsprechende Formfüllwand durchsetzt und die Außenseite mit dem Innenvolumen der Öffnung in Verbindung bringt,

— und daß man in das Innenvolumen der Öffnung (3) bis zu dessen vollständiger Füllung durch das Reservierrohr (9, 10) nach Härtung des Zements der Verschlußwände (15, 16) ein flüssiges polymerisierbares Kunstharz einspritzt, das mit sehr fein unterteilten Stoffen gefüllt ist, die wenigstens ein Element hohen Atomgewichts aufweisen, und das sich zur Aushärtung durch Polymerisation in situ in der Öffnung eignet.

2. Verfahren nach dem Anspruch 1, dadurch gekennzeichnet, daß die Formfüllwände (7, 8) aus Teilstücken einer Polystyrolplatte gebildet werden.

3. Verfahren nach irgendeinem der Ansprüche 1 und 2, dadurch gekennzeichnet, daß ein aus Profileisen gebildeter Rahmen (11, 12) um jedes der Enden der Öffnung (3) auf den entsprechenden Stirnflächen der Wand (1) angeordnet wird, um einen Raum um die Kabel herum am Ausgang der Öffnung (3) zu bilden, in den der Brei von feuerfestem Zement eingespritzt wird.

4. Verfahren nach irgendeinem der Ansprüche 1, 2 und 3, dadurch gekennzeichnet, daß der Füllstoff des polymerisierbaren Kunstharzes ein Pulver eines zur Gruppe Blei, Bleioxid, Baryt gehörenden Stoffes ist.

5. Verfahren nach irgendeinem der Ansprüche 1, 2, 3 und 4, dadurch gekennzeichnet, daß das polymerisierbare Kunstharz ein Silikonelastomer mit Doppelbestandteilen ist.